# EUROPEAN PATENT APPLICATION

(11) **EP 1 094 310 A1**
(43) Date of publication of application: **25.04.2001**
(21) Application number: 99830659.1
(22) Date of filing: 20.10.1999
(51) Int. Cl.: G01N 1/06

(54) **A microtome with aspiration**

(71) Applicant: Bio Optica-Milano S.p.A., 20134 Milano (IT)
(72) Inventor: Sbona, Carlo, 20133 Milano (IT)
(74) Representative: Long, Giorgio

(57) **Abstract**

A microtome (1) with aspiration comprises a support (5) for receiving a tissue sample (6) to be sectioned, the support (5) being movable so as to perform an alternating movement combined with a micrometric advance, and a cutting unit (10) having an inclined upper surface (19) for collecting sections (21) produced by the cutting of the sample (6), and is characterized in that it further comprises aspiration means, outside the cutting unit (10), for aspirating the sections (21) from the inclined surface (19).

## Description

The present invention relates to a microtome with aspiration for cutting thin sections from biological tissue samples for use in histology and similar applications.

The present invention also relates to aspiration apparatus to be associated with a microtome in order to aspirate sections of a biological tissue sample from a cutting unit of the microtome.

It is known that microtomes are devices which can cut suitably prepared biological tissue samples into thin sections of variable predetermined and uniform thickness, for example, of between 0.5 and 60 microns, for histological examination with the aid of optical microscopes.

A conventional microtome comprises a support for a biological tissue sample to be cut, the support being movable so as to perform a alternating movement combined with a micrometric advance in a direction perpendicular to the plane of the alternating movement, and a cutting unit on which is mounted interchangeably a blade which is orientable relative to the support and which, in conjunction with the alternating movement of the support, can section the tissue as desired.

It is also known that the method of producing sections of the desired thickness from a sample of biological tissue with the aid of the above-mentioned microtomes is somewhat awkward and laborious.

In practice, the operator has to perform repeated cuttings of the sample under examination in order to remove the material, such as paraffin or resin, which is used for its preparation and in which the biological tissue is enclosed, and possibly also portions of tissue which are imperfect for histological examination, before it is possible to obtain tissue sections of the desired quality.

Moreover, during the use of the above-mentioned microtomes, the operator disadvantageously comes into contact with a considerable quantity of rejected sections which soil the working environment, the operator also being exposed to small and often volatile particles of tissue and/or preparation material which are produced during the cutting of the samples.

United States patent No. 5,740,708 describes a microtome including an aspiration device which can remove the rejected sections produced by the cutting of a sample of biological tissue as soon as they are formed on an upper inclined surface of the cutting unit of the microtome.

The aspiration device comprises an aspiration cavity formed in the upper surface of the cutting unit and in fluid communication with a source of vacuum or reduced pressure, a flap valve for opening or closing the cavity, and a cover hinged on the cutting unit and covering the said cavity and part of the blade so as to define a channel parallel to the upper surface for the entry of the sections produced by the cutting of the tissue sample and for guiding a constant aspiration flow exerted on the sections.

When the operator considers that a section of the sample is not usable for his purposes, he operates suitable means which open the flap valve so that the undesired section is drawn into the cavity by the reduced pressure present therein.

However, the use of an aspiration system as described in Unites States patent 5,740,708 in a microtome requires substantial technical modifications of the cutting unit involving appreciable additional design and production costs.

Moreover, in the microtome of the above-mentioned United States patent, the sections of the biological tissue sample may disadvantageously remain attached to the walls of the narrow channel formed between the cover and the upper surface of the cutting unit when the microtome is in use.

The technical problem upon which the present invention is based is that of providing a microtome with aspiration which is of simple and inexpensive construction and which enables the rejected sections produced by the cutting of tissue samples to be removed from the operator's working area as soon as they are formed without having the disadvantages mentioned above with reference to the microtomes of the prior art.

This problem is solved by a microtome for cutting biological tissue samples comprising a support for receiving a tissue sample to be cut, the support being movable so as to perform an alternating movement combined with a micrometric advance, and a cutting unit having an inclined upper surface for collecting sections produced by the cutting of the sample, characterized in that it further comprises aspiration means, outside the cutting unit, for aspirating the sections from the inclined collecting surface.

The present invention also relates to aspiration apparatus to be associated with a microtome in order to aspirate sections of a biological tissue sample from a cutting unit of the microtome, the apparatus comprising:
- a base for supporting a microtome,
- a substantially rigid aspiration tube, outside the cutting unit, for aspirating the sections, and
- an aspirator in fluid communication with the aspiration tube.

Further characteristics and advantages of the microtome and of the aspiration apparatus according to the present invention will become clearer from the following description of some preferred embodiments thereof, given by way of non-limiting example, with reference to the appended drawings, in which:
Figure 1 is a perspective view of a microtome according to the invention,
Figure 2 is a perspective view of an aspirator used in association with the microtome of Figure 1,
Figure 3 is a perspective view of the aspirator of Figure 2 in an open configuration,
Figure 4 is a perspective view of some internal elements of the aspirator of Figure 2,
Figure 5 shows aspiration apparatus according to the invention,
Figure 6 is a perspective view showing a detail of the aspiration apparatus of Figure 5 from below,
Figure 7 is a perspective view of the aspiration apparatus of Figure 5 associated with a conventional microtome,
Figure 8 shows schematically the operation of the aspirator of the microtome of Figure 1,
Figure 9 shows schematically the operation of the aspiration apparatus of Figure 5 associated with a conventional microtome,
Figure 10 shows schematically a series of enlargements of the cutting region of a microtome according to the invention and of a conventional microtome with which the aspiration apparatus according to the invention has been associated, in order to show the stages of the operation of these microtomes.

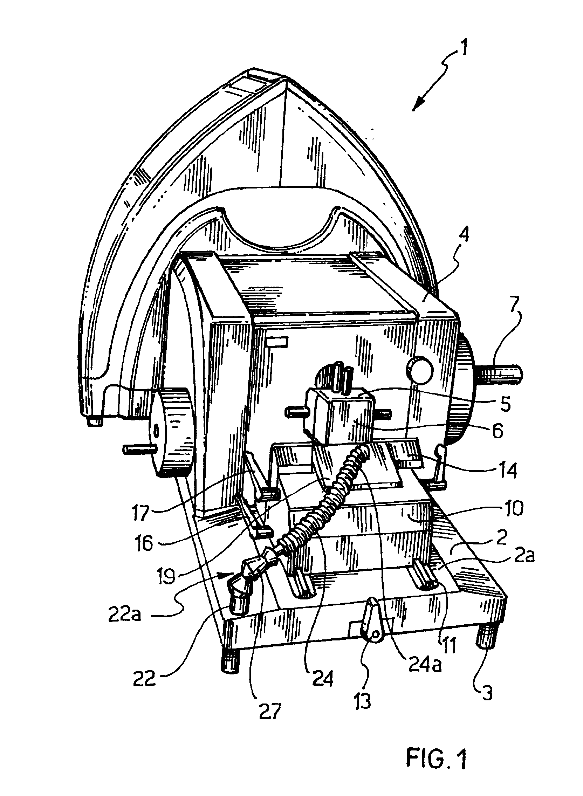

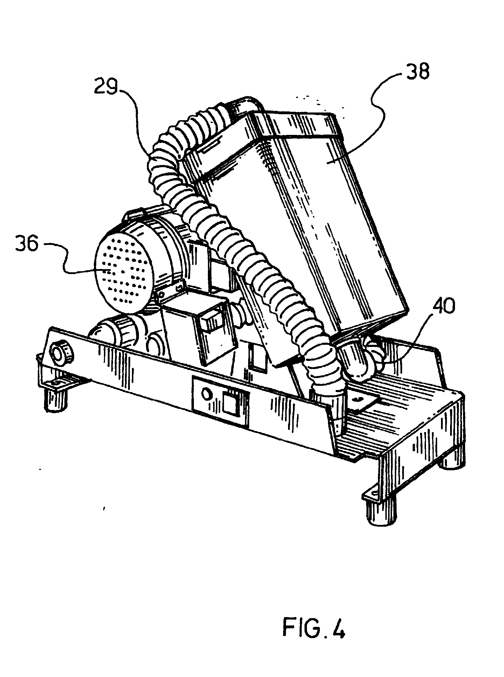

With reference to Figures 1-4, a microtome 1 comprises a base 2 with supporting feet 3, and a body 4 enclosing conventional mechanisms for imparting a vertical alternating movement combined with a horizontal micrometric advance to a support 5 to which a sample of biological tissue 6 to be sectioned is fixed.

In the microtome 1, the above-mentioned mechanisms are operated by a respective lateral handle 7 for the vertical alternating movement which, by virtue of an adjustable system of levers inside the microtome, also automatically provides for the micrometric horizontal advance.

The microtome 1 also comprises a cutting unit 10 which can slide along guides 11 fixed to a portion 2a of the base 2 and which can be locked in a predetermined position by the operation of a suitable knob 13.

A blade 14 mounted interchangeably on the cutting unit 10 is arranged obliquely relative to the support 5 and can be oriented relative thereto by means of an adjustment knob 16.

A further adjustment knob 17 enables the blade 14 to be moved horizontally relative to the support 5 so that the entire cutting surface of the blade can be utilized.

The cutting unit 10 also comprises an inclined upper surface 19 on which sections 21 produced by the cutting of the sample 6 of biological tissue performed by the blade 14 in conjunction with the alternating movement of the support 5 are collected.

The microtome 1 further comprises a connector 22 fitted in a through-hole formed in the base 2 in the vicinity of a corner remote from the body 4.

An upper end portion 22a of the connector 22 has articulated joints 27 and is in fluid communication with a substantially rigid aspiration tube 24.

The articulated joints 27 allow the aspiration tube 24 to be oriented suitably relative to the cutting unit 10.

In the condition of use of the microtome 1, the aspiration tube 24 is preferably oriented in a manner such that its open end 24a is positioned above and close to the inclined surface 19.

According to a particularly preferred embodiment, the open end 24a of the aspiration tube 24 is positioned above the inclined surface 19 on the path along which the sections 21 slide on the surface 19.

The lower end of the connector 22 (not shown) is in fluid communication, beneath the base 2, with an end of a duct 29 which extends under the base 2 and in turn is put into fluid communication with an aspirator, generally indicated 30, associated with the microtome 1.

The aspirator 30 comprises a body 33 which can be opened out to form half-covers 34 in which an aspiration motor 36 and a housing 38 for a filter 39 for collecting the rejected sections produced by the cutting of the tissue sample 6 are enclosed.

The aspiration duct 29 is in fluid communication with the cover 37 of the housing 38 on which the filter 39 is mounted, and the opposite end of the housing 38 is connected to a discharge duct 40 in fluid communication with the aspiration motor 36 for the expulsion of the air drawn in by the aspirator 33.

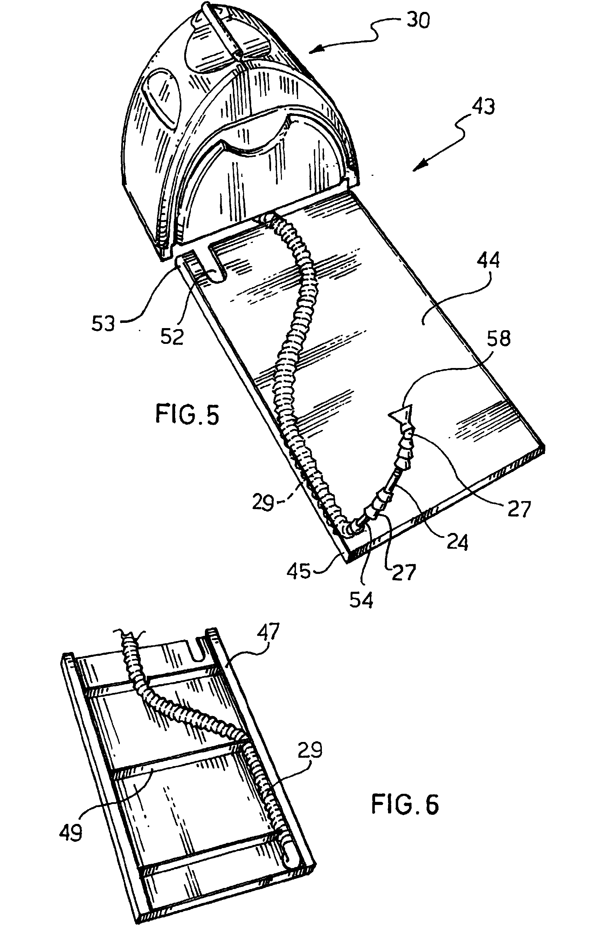

With reference now to Figures 5 and 6, these show aspiration apparatus, generally indicated 43, according to the invention, for microtomes in general.

In these drawings, the parts of the aspiration apparatus 43 which are structurally and functionally identical to corresponding parts of the aspirator 30 and of the microtome 1 described above are indicated by the same reference numerals.

The aspiration apparatus 43 comprises an aspirator 30 which has been described in detail above and a support base 44 for receiving a conventional microtome.

The support base 44 has a substantially inverted U-shaped cross-section and comprises lower end bearing portions 47 connected by a plurality of transverse reinforcing elements 49.

Each of the reinforcing elements 49 may have a notch or a hole through which a portion of an aspiration duct 29, one end of which is in fluid communication with the aspirator 30, can extend.

The holes, together with suitable clips fitted around this portion of the aspiration duct 29, enable this portion of the aspiration duct 29 to be kept fixed to the support base 44.

The support base 44 has, in the vicinity of a corner 45, a through-hole, in which a connector 54 is fitted.

The connector 54 is in fluid communication, at its lower end, with an end of the aspiration duct 29 and, at its upper end, with an end of a substantially rigid tube 24.

The rigid tube 24 has a series of articulated joints 27 so that it can be oriented relative to the cutting unit of a conventional microtome disposed on the support base 44.

Moreover, an aspiration nozzle 58 is mounted on the open end of the rigid tube 24.

The support base 44 also has a U-shaped notch 52 in the vicinity of a corner 53 remote from the corner 45 in the vicinity of which the through-hole is formed in the base 44.

The aspiration duct 29 can advantageously be fitted in the notch 52 when the aspirator 30 is disposed on a portion of the base 44 to reduce the space occupied by the apparatus 43 according to the invention.

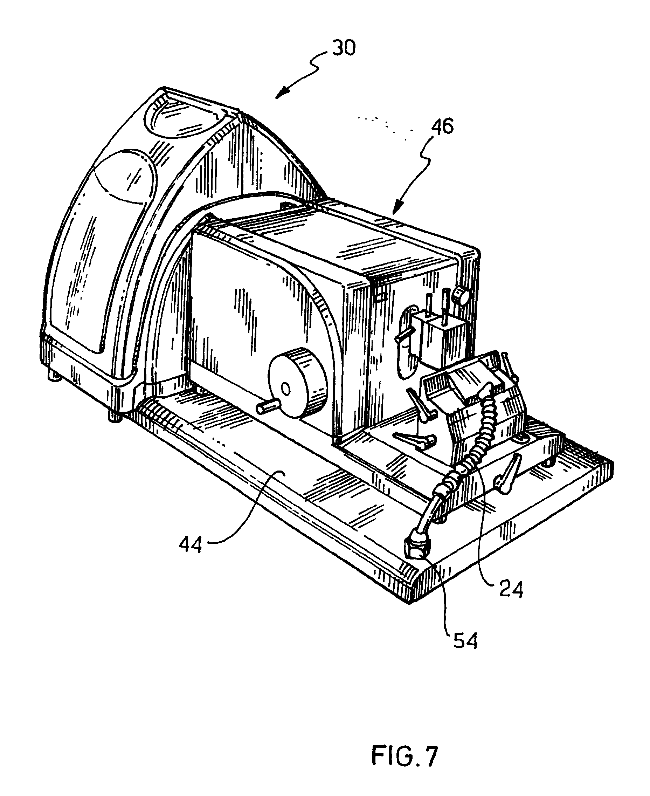

In Figure 7, the aspiration apparatus 43 according to the invention is shown in association with a conventional microtome, generally indicated 46.

In the condition of use of the microtome 46, the rigid tube 24 is oriented relative to the cutting unit 10 in a manner such that its open end, which may be constituted by an aspiration nozzle 58, is preferably positioned above and close to the inclined surface 19.

According to a particularly preferred embodiment, the open end of the aspiration tube 58 is positioned above the inclined surface 19 on the path along which the sections 21 slide on the surface 19 when the microtome 46 is in use.

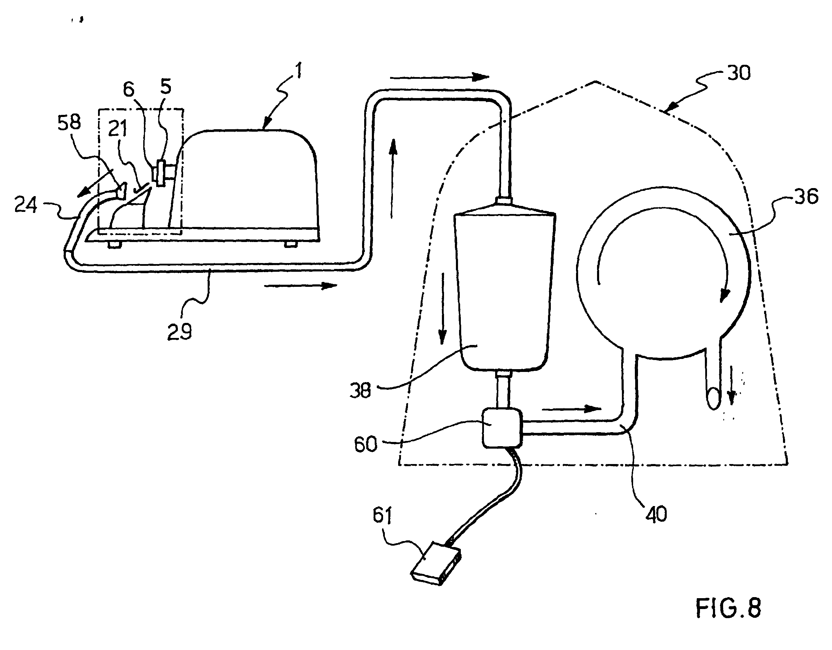

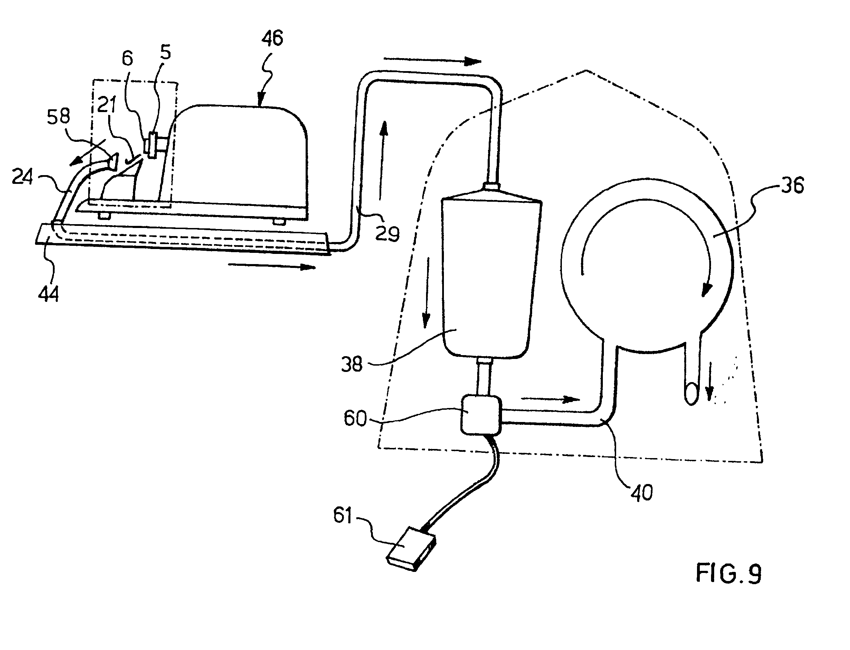

Figures 8 and 9 show schematically the operation of the aspirator 30 associated with the microtome 1 (Figure 8) and the operation of the aspiration apparatus 43 associated with a conventional microtome 46.

In both of the cases shown in these drawings, when the sections 21 produced by the cutting of a tissue sample 6 fixed to a support 5 of the microtome 1 or 46 are not of interest to the operator, they are drawn into the rigid tube 24 in order then to pass through the aspiration duct 29 and to be collected in the filter 39 of the aspirator 30.

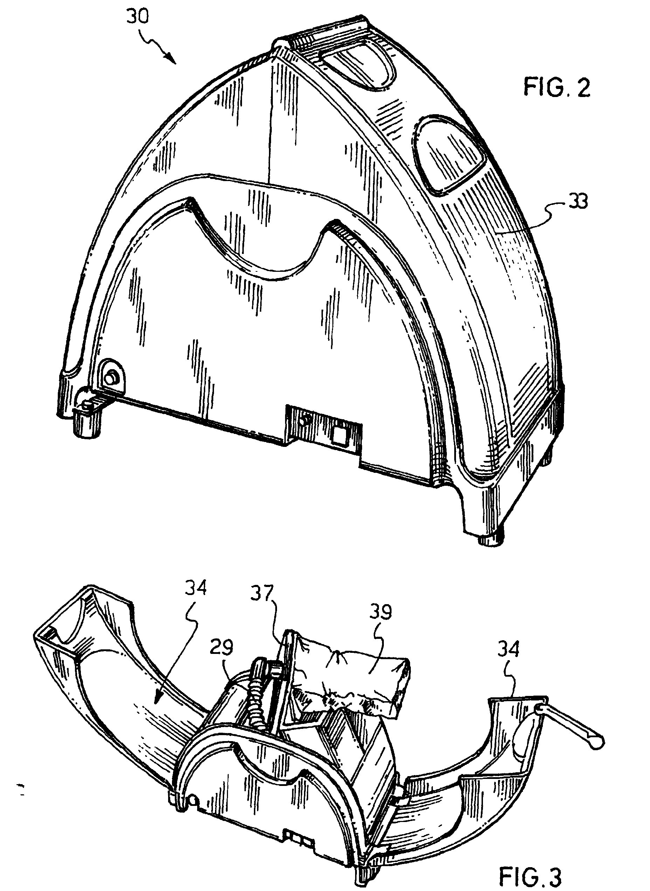

As shown in Figure 3, the filter 39 containing the rejected sections 21 can easily be removed from its housing 38 and can advantageously be disposed of as special hospital waste.

The air drawn in by the aspirator 30 also passes through the discharge duct 40 and hence through the motor 36 in order to be expelled from the aspirator 30.

According to one embodiment of the invention, the aspirator 30 further comprises means, preferably a solenoid valve 60 or a similar device, for permitting or preventing aspiration.

The solenoid valve 60 can advantageously be operated by the operator by suitable control means.

According to one embodiment of the invention, the control means comprise a foot switch 61.

According to a preferred embodiment of the invention, the alternating movement of the support 5 comprises an outward stroke for cutting the sample 6 and a return stroke for positioning the support 5 for a subsequent cutting cycle, and the control means comprise a switch which is preferably fitted in the microtome and the operation of which is associated with the alternating movement of the support 5 so that the aspiration of the sections 21 can take place simultaneously with the movement of the support 5 during the return stroke.

This advantageously avoids the need for the foot switch 61 to be operated upon each cutting cycle.

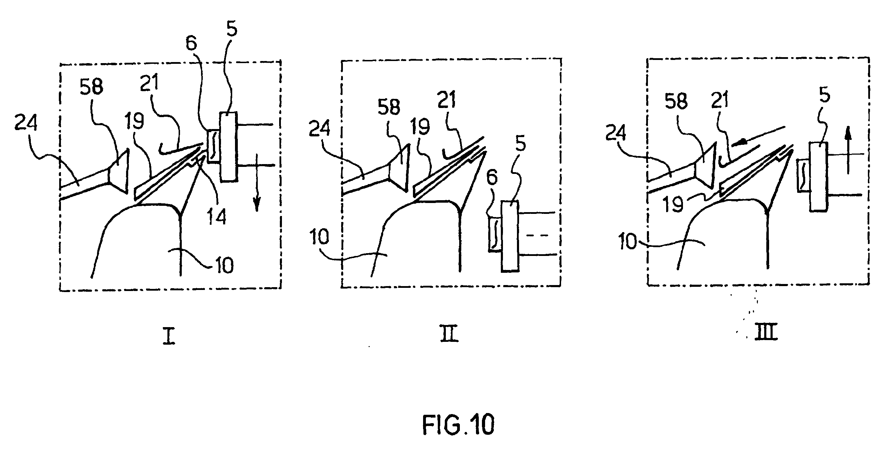

Figure 10 shows the operation of the microtome according to the invention and of a conventional microtome with which aspiration apparatus according to the invention is associated.

In this drawing, the cutting stage is schematically indicated I; in this stage, the support 5 to which a sample of biological tissue 6 is fixed, after being positioned suitably relative to the blade 14, is moved so as to perform a vertical downward travel.

During this travel, the blade 14 comes into contact with the sample 6 and removes therefrom a thin section 21 which is collected on the inclined collecting surface 19 of the cutting unit 10.

During stage II, the support 5 has reached a lower travel-limit position; at this point, the operator can assess whether the section 21 collected on the surface 19 is usable for his purposes.

If the operator is of the opinion that the section 21 is usable, it is recovered and prepared for subsequent histological examination.

If, however, the operator considers that the section 21 is not usable for his purposes, he will arrange for the section 21 to be removed from the surface 19 as shown in stage III.

In this stage, the operator can operate the foot switch 61 which controls the solenoid valve 60 so as to allow the section 21 to be drawn into the rigid tube 24 in order then to be collected in the filter 39.

Alternatively, if the means for controlling the solenoid valve 60 are associated with the alternating movement of the support 5, the aspiration of the section 21 may be activated by these control means simultaneously with a vertical upward movement of the support 5 and then deactivated automatically when the support 5 reaches an upper travel-limit position, from which it can be used in a subsequent cutting cycle.

An expert in the art will understand that the presence of a foot switch 61, or of a switch associated with the movement of the support 5, for operating the solenoid valve 60 is particularly advantageous since, once the aspiration motor 36 of the aspirator 30 has been set in operation at the start of the working day, the operator can activate the aspiration of the sections 21 only when necessary and without the need to divert his attention from the operations performed on the microtome.

The main advantage of the microtome with aspiration according to the invention consists of its ability effectively to remove the rejected sections from the operator's working area.

Another advantage lies in the fact that the construction of the microtome according to the invention is simple and inexpensive since the use of aspiration means outside the cutting unit does not require any technical modification of the microtome and introduces additional costs which are insignificant in comparison with those involved in the production of a conventional microtome without aspiration.

A further advantage of the invention is that the aspiration apparatus can easily also be associated with conventional microtomes already in use without aspiration, thus improving the performance of these microtomes.

In order to satisfy further and contingent requirements, an expert in the art may apply to the microtome and to the aspiration apparatus according to the invention, many further modifications and variations all of which, however, are included within the scope of protection defined by the appended claims.

## Claims

1. A microtome (1) for cutting biological tissue samples, comprising a support (5) for receiving a tissue sample (6) to be sectioned, the support (5) being movable so as to perform a alternating movement combined with a micrometric advance, and a cutting unit (10) having an inclined upper surface (19) for collecting sections (21) produced by the cutting of the sample (6), characterized in that it further comprises aspiration means, outside the cutting unit (10), for aspirating the sections (21) from the inclined surface (19).

2. A microtome according to Claim 1, in which the aspiration means comprise:
- a substantially rigid aspiration tube (24) for aspirating the sections (21), and
- an aspirator (30) in fluid communication with the aspiration tube (24).

3. A microtome according to Claim 2, further comprising a connector (22) fitted in a base (2) of the microtome (1) and connected at its upper end to the aspiration tube (24).

4. A microtome according to Claim 3, in which an upper end portion (22a) of the connector (22) has articulated joints (27).

5. A microtome according to any one of Claims 2 to 4, in which the aspiration tube (24) has articulated joints (27).

6. A microtome according to any one of Claims 2 to 5, in which the open end (24a) of the aspiration tube (24) is connected to an aspiration nozzle (58).

7. A microtome according to any one of Claims 2 to 6, in which the aspiration tube (24) is oriented, in the condition of use, in a manner such that the open end (24a) or the aspiration nozzle (58) is positioned above and close to the inclined surface (19).

8. A microtome according to Claim 7, in which the open end (24a) or the aspiration nozzle (58) is positioned above the inclined surface (19) on the path along which the sections (21) slide on the surface (19).

9. A microtome according to any one of Claims 2 to 8, in which the aspirator (30) comprises an aspiration motor (36) in fluid communication with a housing (38) for a filter (39) for collecting the sections (21).

10. A microtome according to any one of Claims 2 to 9, in which the aspirator (30) further comprises controlled means for allowing or preventing aspiration of the sections (21).

11. A microtome according to Claim 10, in which the controlled means comprise a solenoid valve (60).

12. A microtome according to Claim 11, in which the solenoid valve (60) is controlled by a foot switch (61).

13. A microtome according to Claim 11, in which the alternating movement of the support (5) comprises an outward stroke for the cutting of the sample (6) and a return stroke for positioning the support (5) for a subsequent cutting cycle, and the solenoid valve (60) is controlled by a switch the operation of which is associated with the alternating movement of the support (5) so that the sections (21) can be aspirated simultaneously with the movement of the support (5) during the return stroke.

14. Aspiration apparatus (43) to be associated with a microtome (46) in order to aspirate sections (21) of a biological tissue sample (6) from a cutting unit (10) of the microtome (46), the apparatus comprising:
- a base (44) for supporting a microtome (46),
- a substantially rigid aspiration tube (24), outside the cutting unit (10), for aspirating the sections (21), and
- an aspirator (30) in fluid communication with the aspiration tube (24).

15. Apparatus according to Claim 14, further comprising a connector (22) fitted in the base (44) and connected at its upper end to the aspiration tube (24).

16. Apparatus according to Claim 14 or Claim 15, in which the aspiration tube (24) has articulated joints (27).

17. Apparatus according to any one of Claims 14 to 16, in which the open end (24a) of the aspiration tube (24) is connected to an aspiration nozzle (58).

18. Apparatus according to any one of Claims 15 to 17, in which the connector (22) is fitted in the vicinity of a first corner (45) of the base (44).

19. Apparatus according to Claim 18, in which the base (44) comprises a notch (52) in the vicinity of a second corner (53) remote from the first corner (45).

20. A microtome (46) with which aspiration apparatus (43) according to any one of Claims 14 to 19 is associated.
